# EUROPÄISCHE PATENTSCHRIFT

(11) **EP 0 485 518 B1**
(45) Veröffentlichungstag und Bekanntmachung des Hinweises auf die Patenterteilung: **08.06.1994**
(21) Anmeldenummer: 90913324.1
(22) Anmeldetag: 30.07.1990
(51) Int. Cl.: A01G 3/03

(54) **BAUMSCHERE**
PRUNING SHEARS
SECATEUR

(30) Priorität: 03.08.1989 DE 3925752
(43) Veröffentlichungstag der Anmeldung: 20.05.1992
(73) Patentinhaber: WOLF-Geräte GmbH Vertriebsgesellschaft KG, D-57518 Betzdorf (DE)
(72) Erfinder: WEID, Helmut, D-5241 Niederdreisbach (DE); HELD, Peter, W-5241 Scheuerfeld (DE)
(74) Vertreter: Koch, Günther, Dipl.-Ing.
(86) Internationale Anmeldenummer: EP9001240
(87) Internationale Veröffentlichungsnummer: WO9101627

(56) Entgegenhaltungen:
- DE-A- 1 911 737
- DE-C- 949 784

## Beschreibung

Die Erfindung bezieht sich auf eine Baumschere der im Oberbegriff des Patentanspruchs 1 angegebenen Gattung. Derartige Baumscheren haben den Vorteil, daß die Schneidebene gegenüber der Stielachse angestellt werden kann, wodurch zu schneidende Äste besser zugänglich sind und mit einem geraden Schnitt abgetrennt werden können, was den Kraftaufwand gegenüber einem Schrägschnitt verringert. Bei einem gattungsgemäßen Gerät zum Baumausschneiden, welches in der DE-A-19 11 737 beschrieben ist, befindet sich das Drehgelenk in einem rechtwinklig am Stielende ansetzenden Arm und der feste Scherenschenkel ist in Fortsetzung dieses seitlich vorstehenden Armes angeordnet, und das Scherenmaul befindet sich in einem erheblichen seitlichen Abstand zur Drehachse bzw. zur Stielachse. Hierdurch wird es zwar möglich, die Drehachse in jeder Schwenkstellung der Schere auf die Laufrillen der Umlenkrollen ausgerichtet zu halten, was die Seilzugführung begünstigt. Der Schwerpunkt der Scherenanordnung liegt aber weit ab von der Stielachse, was die Führung der Schere erschwert.

Bei einer in der DE-U1-82 24 195 beschriebenen Baumschere liegt die Drehgelenkachse koaxial zur Achse der Umlenkrolle für das Zugseil. Hierdurch wird eine gute Zugseilführung in jeder Winkelstellung gewährleistet. Da jedoch in diesem Falle die Drehgelenkachse die Schneidebene der Baumschere senkrecht durchsetzt, ist eine Änderung der Winkelanstellung zwischen Schneidebene und Stielachse nicht möglich, sondern lediglich eine Veränderung der Winkellage des Scherenmauls.

Der Erfindung liegt die Aufgabe zugrunde, eine gattungsgemäße Schere derart zu verbessern, daß bei optimaler Einstellbarkeit der Schneidebene bzw. des Scherenmauls und ergonometrisch günstiger Handhabung eine einwandfreie Seilführung ohne die Gefahr eines Einklemmens oder Abspringens des Zugseils gewährleistet ist.

Gelöst wird die gestellte Aufgabe durch die im Kennzeichnungsteil des Patentanspruchs 1 angegebenen Merkmale.

Dadurch, daß das Scherenmaul eine gerade oder je nach Schwenkstellung abgeknickte Fortsetzung der Stielachse bildet, kann die Baumschere über den Stiel gezielt bequem an den zu schneiden Ast herangeführt werden. Durch die gekennzeichnete Anordnung der Führungsrollen wird in jeder Winkelstellung eine optimale Seilführung gewährleistet und es kann in jeder Winkelstellung mit gleichem Kraftaufwand geschnitten werden. Dadurch, daß die Schere auf jede Schnittebene eingestellt werden kann, eignet sie sich insbesondere als Grünschnittschere. Es kann in jeder Winkelstellung das Scherenmaul in Fortsetzung des Führungsstieles bequem auf den jeweils zu schneidenden Ast eingestellt werden.

Zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
- Fig. 1: eine Ansicht der erfindungsgemäßen Schere;
- Fig. 2: einen Längsschnitt der Schere gemäß Fig. 1;
- Fig. 3: eine teilweise geschnittene Ansicht gegenüber Fig. 1 und 2 um 90° verdreht;
- Fig. 4: eine der Figur 1 entsprechende Ansicht der Schere, teilweise geöffnet.

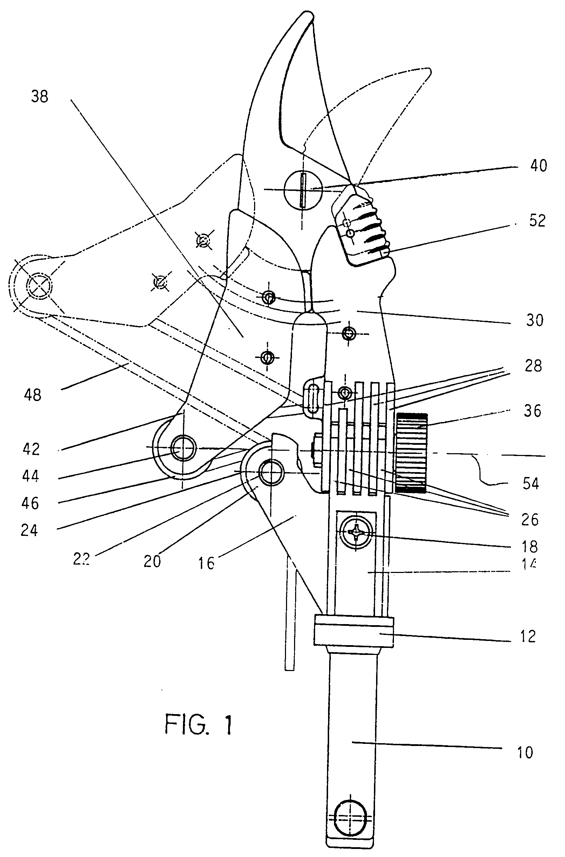

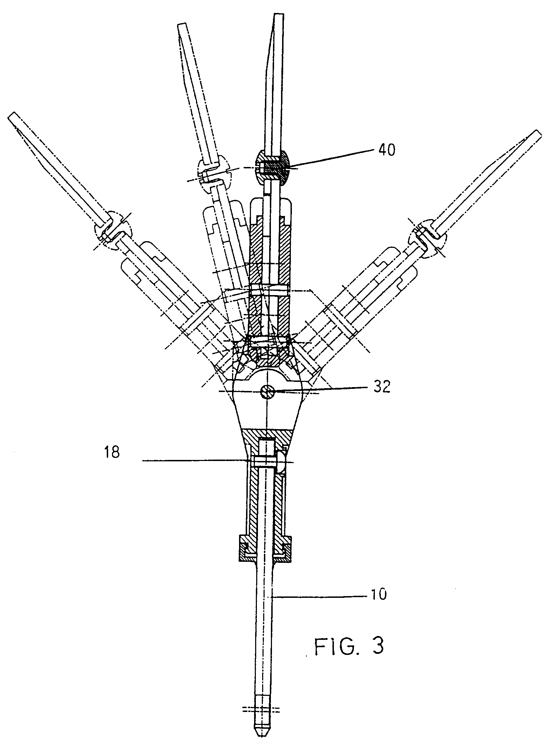

Die Baumschere gemäß Fig. 1 bis 3 weist einen Geräteeinsteckzapfen 10 einer Stielbefestigungskupplung auf, die beispielsweise entsprechend der DE-PS 31 30 703 ausgebildet sein kann. Mittels der Stielbefestigungskupplung kann die Schere auf einem längeren oder kürzeren Führungsstiel aufgesetzt werden. Es ist jedoch auch möglich, die Schere fest mit dem Stiel zu verbinden. Der Geräteeinsteckzapfen 10 erstreckt sich durch einen Anschlagbund 12 mit einer oberen Verlängerung 14 in ein Kunststoffspritzgußteil 16, in dem die Verlängerung 13 verankert und durch eine Niete 18 gesichert ist. Das Kunststoffteil 16 weist zwei seitlich schräg nach oben weisende Gabelarme 20 auf, zwischen denen eine Seilrolle 24 mittels einer Achse 22 gelagert ist. Das Kunststoffteil weist außerdem nach oben vorstehende Gabelarme 26 auf, zwischen die Gabelarme 28 des festen Scherenschenkels 30 einer Baumschere eingreifen. Die Gabelarme 26, 28 sind mit Durchgangslöchern versehen, durch die ein Gelenkbolzen 32 geführt ist, der mit seinem einen Ende in eine im Scherenschenkel 30 verankerte Mutter 34 eingeschraubt ist und am anderen Ende einen Feststellknopf 36 trägt, mit dem die Gabelarme reibungsschlüssig in jeder Winkelstellung fest miteinander verbunden werden können. Die Drehachse 54 des Drehgelenks schneidet die Stielachse senkrecht und fluchtet mit der Seilrille der Seilrolle 24 in deren über der Drehachse 22 liegenden Abschnitt.

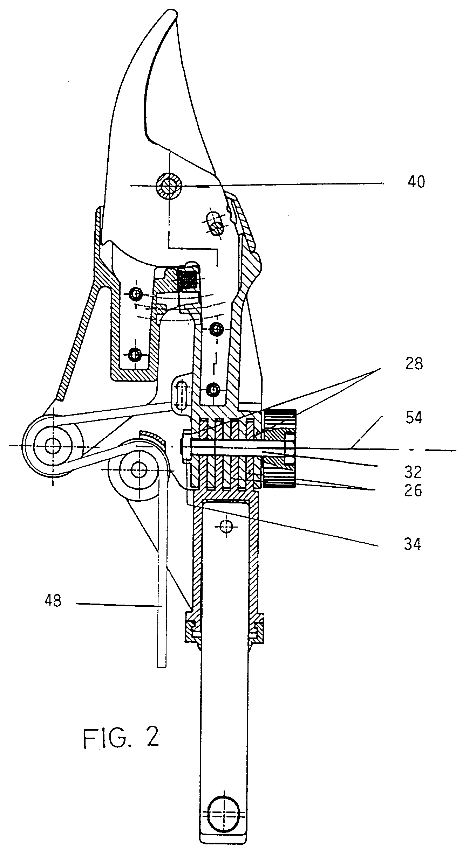

Mit dem festen Scherenschenkel 30 ist der bewegliche Scherenschenkel 38 über einen Gelenkbolzen 40 verbunden. Der Scherenschenkel 38 besteht vorzugsweise ebenso wie der Scherenschenkel 30 aus Kunststoffmaterial, welches mit den metallischen Scherenteilen vernietet ist, wie insbesondere aus Fig. 2 ersichtlich.

Das freie Ende des Scherenschenkels 38 weist Gabelarme 42 auf, die eine Achse 44 haltern, auf der eine Seilrolle 46 drehbar ist. Ein Zugseil 48 ist mit einem Ende an einer Öse 50 des testen Scherenschenkels 30 verankert und in der aus der Zeichnung ersichtlichen Form über die Seilrollen 46 und 24 geführt. Das Seil erstreckt sich über die Länge des nicht dargestellten Stiels nach unten. Eine nicht dargestellte Öffnungsfeder hält die Scherenschenkel gespreizt und durch Zug am Seil kann über den Flaschenzug verstärkt die Schere geschlossen werden. Bei Nichtgebrauch kann die Schere durch einen Verschlußschieber 52 in Schließstellung gehalten werden. Wie aus der Zeichnung ersichtlich, bildet in jeder Winkelstellung das geöffnete Scherenmaul eine gerade oder abgeknickte Fortsetzung der Stielachse, so daß bequem das Maul mit dem Stiel an den jeweils zu schneidenden Ast herangeführt werden kann. Das Schneiden kann in jeder Winkelstellung erfolgen, weil über die Seilrollen in jeder Winkelstellung eine einwandfreie Führung gewährleistet ist.

Wie aus Fig. 1 ersichtlich, verlaufen die Seilabschnitte zwischen den Rollen 24 und 46 bzw. zwischen der Öse 50 und der Seilrolle 46 in Öffnungsstellung schräg nach oben, und in Schließstellung schräg nach unten. Auf diese Weise wird eine sichere Führung des Seils in den Rollen gewährleistet und ein Herausspringen weitgehend verhindert.

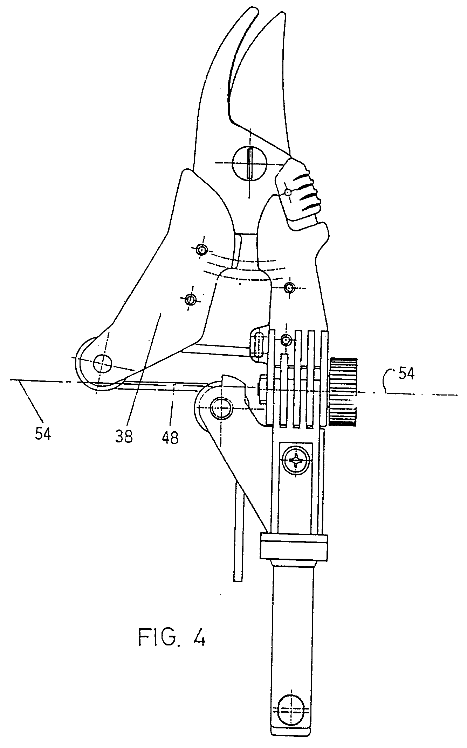

Aus Fig. 4 ist ersichtlich, daß in einer teilweise geöffneten Stellung der Schere die Drehachse 54 des Drehgelenks mit der Achse des Zugseilabschnitts fluchtet, der zwischen den Seilrollen 24 und 46 verläuft. Hierdurch wird erreicht, daß keine weiteren Führungsrollen benötigt werden, da auch in den Endstellungen, die in Fig. 1 strichpunktiert (volle Öffnungsstellung) bzw. ausgezogen (Schließstellung) angegeben sind, die Winkelabweichung zwischen der Achse 54 und der Seilachse relativ gering ist. In geschlossener Stellung verläuft die Seilachse in dem angegebenen Abschnitt zwischen den Seilrollen gegenüber der Drehachse 54 schräg nach unten, und in der Öffnungsstellung schräg nach oben. Selbst bei äußerster Schrägstellung der Schere kann die Seilrolle 24 die Seitenführung des Zugseils bis in die Endpositionen übernehmen.

## Patentansprüche

1. Baumschere, deren fester Scherenschenkel (30) über ein Drehgelenk (26, 28, 30, 32, 34, 36) mit dem Ende eines Stiels verbunden ist und deren beweglicher Scherenschenkel (38) entgegen der Kraft einer Öffnungsfeder durch ein Zugseil (48) geschlossen werden kann, das über eine Führungsrolle (46) am Stielende geführt ist, wobei die Drehachse (54) des Drehgelenkes die Stielachse und die Achse des festen Scherenschenkels senkrecht schneidet, wobei die Drehachse (54) mit der Laufrille der Führungsrolle (24) am Stielende fluchtet,
dadurch gekennzeichnet, daß das geöffnete Scherenmaul eine gerade oder abgeknickte Fortsetzung der Stielachse bildet, daß in einer mittleren Öffnungsstellung der Schere die Drehachse des Drehgelenks (54) mit der Achse des Zugseilabschnitts zwischen den Seilrollen (24 und 46) am Stielende bzw. am beweglichen Scherenschenkel fluchtet, und daß die Achse des Zugseilabschnitts zwischen diesen Seilrollen (24 und 26) gegenüber der Drehachse (54) in Schließstellung der Schere nach unten und in Öffnungsstellung nach oben angestellt ist, wobei die Absolutwerte dieser beiden Winkel etwa gleich sind.

2. Baumschere nach den Anspruch 1,
dadurch gekennzeichnet, daß das Drehgelenk ineinandergreifende Gabelarme (26, 28) von Stielende bzw. Scherenschenkel (30) aufweist, die gelocht sind und durch die ein Gelenkbolzen (32) geführt ist.

3. Baumschere nach Anspruch 2,
dadurch gekennzeichnet, daß der Gelenkbolzen mit einem Feststellknopf (36) zur reibungsschlüssigen Verbindung der Gabelarme versehen ist.

4. Baumschere nach den Ansprüchen 1 bis 3,
dadurch gekennzeichnet, daß das Drehgelenk vom Geräteeinsteckzapfen (10) einer Stielbefestigungskupplung getragen ist.

5. Baumschere nach einem der Ansprüche 1 bis 4,
dadurch gekennzeichnet, daß die Scherenschenkel (30, 38) und das Stielende (16) von Kunststoff-Spritzgußteilen gebildet bzw. ummantelt sind.

## Claims

1. Pruning shears the fixed arm (30) of which is connected by a swivel joint (26, 28, 30, 32, 34, 36) to the end of a handle while its moveable arm (38) can be closed against the force of an opening spring by a traction cable (48) which is guided over a guide pulley (46) on the end of the handle, the swivel axis (54) of the swivel joint intersecting the axis of the handle and the axis of the fixed arm of the shears at right angles, therein the axis of rotation (54) is on a line with the groove of the guide pulley (24) at the end of the handle,
characterized by the fact that the shears in its open position form a straight or an angled extension of the axis of the handle, that in a central open position of the shears, the swivel axis (54) of said swivel joint is aligned with the axis of the section of the traction cable between the guide pulleys (24 and 46) on the end of the handle and on the moveable arm of the shears respectively, and that the axis of the section of the traction cable between these guide pulleys (24 and 26) extends, with respect to the swivel axis (54), obliquely downward in the closed position of the shears and obliquely upward in the open position, the absolute values of these two angles being approximately equal.

2. Pruning shears according to claim 1,
characterized by the fact that the swivel joint has cooperating fork arms (26, 28) of the handle end and shears arm (30) respectively, which arms have holes and through which a hinge pin (32) passes.

3. Pruning shears according to claim 2,
characterized by the fact that the hinge pin is provided with a locking knob (36) for the frictional connection of the fork arms.

4. Pruning shears according to claims 1 to 3,
characterized by the fact that the swivel joint is borne by the tool insertion shank (10) of a handle attachment coupling.

5. Pruning shears according to any of claims 1 to 4,
characterized by the fact that the shear arms (30, 38) and the handle end (16) are formed of or covered by plastic injection moldings.

## Revendications

1. Échenilloir élagueur dont la branche fixe (30) est reliée à l'extrémité d'un manche par le biais d'une articulation tournante (26, 28, 30, 32, 34, 36) et dont la branche mobile (38) peut être fermée contre la force d'un ressort d'ouverture par une corde de traction (48) qui est guidée sur une poulie de guidage (46) à l'extrémité du manche, sachant que l'axe de rotation (54) de l'articulation tournante coupe perpendiculairement l'axe du manche et l'axe de la branche fixe, sachant que l'axe de rotation (54) est en alignement avec la gorge de la poulie de guidage (24) à l'extrémité du manche, caractérisé en ce que la mâchoire ouverte de la cisaille forme un prolongement droit ou courbé de l'axe du manche, en ce que, lorsque la cisaille est en position d'ouverture intermédiaire, l'axe de rotation (54) de l'articulation tournante est en alignement avec l'axe de la partie de la corde de traction entre les poulies (24 et 46) à l'extrémité du manche ou sur la branche mobile de la cisaille, et en ce que l'axe de la partie de la corde de traction entre ces poulies (24, 46) est orienté vers le bas par rapport à l'axe de rotation (54) lorsque la cisaille est en position fermée et vers le haut par rapport à ce même axe de rotation lorsque la cisaille est en position ouverte, sachant que les valeurs absolues de ces deux angles sont approximativement égales.

2. Échenilloir élagueur selon la revendication 1, caractérisé en ce que l'articulation tournante présente des chapes (26, 28) de l'extrémité du manche ou de la branche (30) en prise les unes avec les autres, qui sont perforées et à travers lesquelles est guidé un boulon d'articulation (32).

3. Échenilloir élagueur selon la revendication 2, caractérisé en ce que le boulon d'articulation est muni d'un bouton de blocage (36) pour relier les chapes entre elles par frottement.

4. Échenilloir élagueur selon les revendications 1 à 3, caractérisé en ce que l'articulation tournante est portée par le pivot d'emboîtement (10) d'une pièce d'accouplement pour fixer le manche.

5. Échenilloir élagueur selon l'une des revendications 1 à 4, caractérisé en ce que les branches (30, 38) de la cisaille et l'extrémité du manche (16) sont formées ou entourées de pièces en matière plastique moulées par injection.
